# EUROPEAN PATENT APPLICATION

(11) **EP 1 964 640 A1**
(43) Date of publication of application: **03.09.2008**
(21) Application number: 07425120.8
(22) Date of filing: 01.03.2007
(51) Int. Cl.: B23K 26/03

(54) **Equipment for automatic determination of the fit parameters in deep engraving machine tools laser works**

(71) Applicant: C.B. Ferrari Srl., 41100 Modena (IT)
(72) Inventor: Tani, Giovanni, 40131 Bologna, (BO) (IT)

(57) **Abstract**

The equipment, to be acting needs a laser machine tool, is concerned of a high precision opto-electronic instrument to scan surfaces without contact and it is assembled on the machine itself; in addition there is an hardware and software system, which is interfaced to the machine control system by a specific cabled board. This equipment interacts with the machine and is able to execute a totally automatic procedure, in consequence of which the machine and the laser ray execute specific operations on metal surfaces to work; the scanning instrument gets geometric-dimensional data of that surfaces which are elaborated by a software system that computing data according to original criteria, obtains necessary informations on technology process to execute an efficient working cycle in the real production on that material.

## Description

### Introduction

### Description of the prior art

Similar equipments are already used on laser machines, make measures of a preceding stopped work and these measure data are generally read by the operator which has to decide if to continue the work or change some parameters to enhance the result.

To determine with accuracy the main process parameters to set in laser machine tools that work in milling or deep engraving is a long and complex operation.
These parameters, acting as the working type you need (roughing, finishing, geometric quality you wish, surface roughness) depend on: the laser source type you use, the material you have to work, the physical status (structure) of the material and its surface. These parameters affect the entity of material removed during each ray pass. These parameters are fundamental information to program the machine working cycle. The number of parameters to set in the machine control is high.

To solve this problem it is often necessary, before to start with production works, to execute an experimental activity in a "trial and error" mode, in other words, to execute a lot of proofs with different technological parameters and verify, for each proof, the results, choosing, at the end, the parameters with the best result.
This activity, considering the high number of parameters to modify , needs: an accurate planning of experiments, long time for
proofs execution, knowledge of specific techniques of measure to evaluate the entity and quality of material removals, synthesis capacity to analyse the results and consequently choose the best parameters.

The factories that wish to start and use this technology or those that have to realize different works on different types of material, differently treated, and that consequently cannot refer on previous experience acquired or on generic data tables, need of a deep knowledge about the mentioned problems which would be only solved by specialized persons and consequently with large expense of time and resources.

### Equipment object of patent.

The equipment, to be acting needs a laser machine tool, is concerned of a high precision opto-electronic instrument to scan surfaces without contact and it is assembled on the machine itself; in addition there is an hardware and software system, which is interfaced to the machine control system by a specific cabled board. This equipment interacts with the machine and is able to execute a totally automatic procedure, in consequence of which the machine and the laser ray execute specific operations on metal surfaces to work; the scanning instrument gets geometric-dimensional data of that surfaces which are elaborated by a software system that computing data according to original criteria, obtains necessary informations on technology process to execute an efficient working cycle in the real production on that material. The equipment presents a really hard aspect of innovative development.

### Summary of invention

### Objective and functions of the invention

The equipment, to be patented, wants:
- Obtain automatically the optimal technological parameters to set in a laser machine tool to execute "laser milling" and "deep engraving" for expected works (rough and finish) on every processing material.
- To allow to know the entity (thickness) of removed material corresponding to selected parameters and so to allow to write an efficient working cycle

This equipment is able to execute a completely automatic procedure that allows, for every material, to:
- make the machine to execute a sequence of very simple works (i.e. square pockets);
- to make and change, for each of these simple works , the technological parameters according to projects of memorized experiments and selectable in function of effective work type to do (rough, finish...)
- to make possible a measure of worked surfaces by a continuous scanning of opto-electronic instrument integrated in the proposed equipment on the machine;
- to compute special experimental coefficients, joined to the material, correlating by statistic techniques, the measures with the optimal technological parameters to use in real works;
- to compute and display the optimal technological parameters to use in real works;

The equipment represents and adds functions to the level laser machine tool, make easy and objective the finding out of technological parameters to use time by time in different works and so, summarizing, to decide the appropriate work cycle for a laser engraving process.

### Equipment description

The equipment, that is integrated with the machine and its control systems, either laser either for axes movements, is made by:
- an optical-electronic instrument controlled and actuated by the original software system, tied to equipment itself, to measure the amount of removal;
- a software system composed in different programs the make the user able to:
   o run the procedure by a guided choices menu;
   o execute automatically all the above mentioned procedures, checking all the different functions of the machine and the measure equipment;
   o to get the technological parameters to be used in the real work.

We have to consider that to use this equipment no one specific or particular laser technology knowledge is due.

The procedure may be run and is then executed in a completely automatic way, so no assistance either to the system or to the machine needs to get a conclusion and results.
It may be activated, consequently, in no man controlled systems.

### Detail of use diagram and drawings

In general two different control systems are used in laser work executions: the first is the Numerical Control of machine tool which uses 'ISO' files generated by the dedicated 'CAM' system; the second is based on some software modules: one to control the laser parameters (i.e. power, frequency, scanning speed), the other to effectively execute the work and to synchronize the activity of the N.C. and the laser.
The developed equipment allows, by specific interface between various subsystems, the integration of the two control systems; this is possible through the development of different software modules shortly referred to as 'APS_INIT', 'APS_SCAN', 'APS_EVAL' collected in a software program and called up by an user interface. Figure N.1 shows the general organization of procedure; yellow boxes represent interaction points of user with the system. The automatic determination of retrieving model becomes through these phases:
1. loading of experimental project to determinate the statistic model. The user decides how many and which parameters to vary, the levels number and their value for each parameter, the retries number, the geometry and feature disposition to work, plus other informations; the system generates necessary informations to control 1-4 items.
2. Run the control system program for laser source and marking head.
3. Import the script generated by the 'APS_INIT' to vary the laser parameters during experimentation.
4. After loading the part program to be executed by the N.C., run the laser manager program to generate the proof pockets.
5. Automatic measurement of worked geometries.
6. Coefficients determination of statistic model.

The bloc diagram shows files generated by the 'APS_INIT ' , particularly:
LOG: containing the geometries of pockets to work.
TXT: Visual Basic script with rules to change configuration parameters.
LST: The operation sequence to execute.
ISO: The part programs loaded in the
N.C. for working and scanning activity.
DAT: informations common to different modules, some of which are the casual sequence of experiments and pockets geometry. Figure N.2 shows the user interface.

### Conclusions:

### Patent justifying and equipment innovation

The above described equipment has characteristics of hard innovative development in various aspects.

First of all is the concept of automatic and integrated procedure to find out the optimal parameters of process for each type of laser work and for each material relating to the effectively status it has (It is known that for same materials the results after a laser work may be significantly different in relation to its structural status and mainly of surface conditions).

It is new the procedure execution mode and its integration in machine tool and laser control systems.

Another innovative aspect is the use, in an integrate way, of an opto-electronic equipment into this procedure. These equipments, already used on laser machines, make measures of a preceding stopped work and these measure data are generally read by the operator which has to decide if to continue the work or change some parameters the enhance the result.
It is an innovation the possibility of introducing the Experiment planning, in the automatic procedure, (in a Design of Experiment "DOE" approach) estimated much suitable for required objectives (types and number of technological parameters to find out) and in addition the way of appliance of statistic techniques to get the desired targets.
The device has to be seen as a 'kit' to be mounted on the machine that can be customized for any machine type or laser.
At the moment there isn't any device, world wide, with these technical performances that we know.

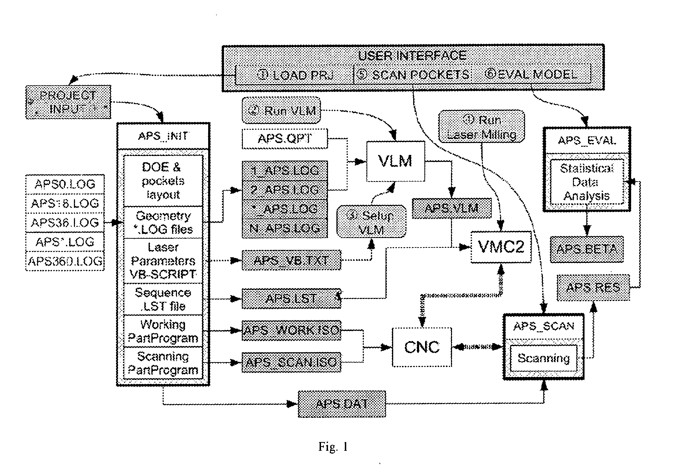

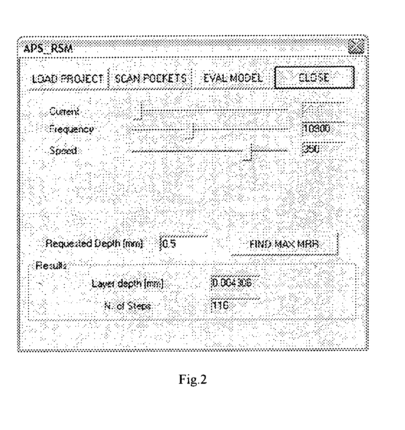

## Claims

1. The equipment is concerned of a high precision opto-electronic instrument, in an Hardware and Software system, to scan surfaces without contact and it is assembled on the laser machine itself;

2. The device has to be seen as a 'kit' to be mounted on the machine that can be customized for any laser machine for deep engraving;

3. The equipment, as claimed in claim 1, is **characterized by** the automatic execution of various operation, like scanning of the surface to work to find out the optimal parameters of process for each type of laser work and for each material or surface, relating to the effectively status it has, for the definition of best laser parameters

4. The equipment , as claimed in claims 1 and 3, is able to execute automatically a set of tests on the material and on the working surface area to define intensity, frequency and speed of the laser ray to find between them the best combination to work

5. The equipment, as claimed in claim 1 and 3, is able to introduce the Experiment planning, in the automatic procedure, in a Design of Experiment "DOE" approach to estimate the much suitable work to reach the goal;

6. The equipment as claimed in claim 1,3,4, is able to verify, by technical statistics, the correct work to do for each type of material or surface relating to the effectively status it has;
